# EUROPEAN PATENT APPLICATION

(11) **EP 2 457 819 A1**
(43) Date of publication of application: **30.05.2012**
(21) Application number: 10192772.1
(22) Date of filing: 26.11.2010
(51) Int. Cl.: B63B 59/00, G03B 42/06

(54) **Under-keel inspection system**

(71) Applicant: The European Union, represented by the European Commission, 1049 Brussels (BE)
(72) Inventor: Andritsos, Fivos, 21026 Gavirate (IT); Garnier, Bernard, 06560 Valbonne (FR)
(74) Representative: Office Freylinger

(57) **Abstract**

An under-keel inspection system (10) for inspection of vessels (20), e.g. underway toward or away from a harbour or other protected anchorage, comprises a beam (14) configured for being arranged across a navigation corridor (18) at a depth sufficient to allow a vessel to pass above the beam during inspection. The beam has a plurality of individual hull inspection devices (12) mounted thereon, which are distributed over the length of the beam. Each hull inspection device is equipped, at least, with a sonar (24) and is coupled with a deployment mechanism that may individually raise and lower the hull inspection device perpendicular to the axis of the beam in such a way as to adjust the distance between the hull inspection device and the vessel to inspect.

## Description

### Technical field

The present invention generally relates to inspection of ship hulls, in particular to an under-keel inspection system that allows inspecting the hull of a ship while it is underway in a navigation corridor.

### Background Art

Hiding illicit cargo on the outside of the hull of medium to large vessels e.g. on the sea-chests or the rudder trunks of large vessels or even on underwater appendices (assuming low enough transit speed at sea) is a commonly quoted and long-known method for smuggling, which can only be countered by diver inspections prior to departure or soon after arrival of the vessel. Hull inspections by divers are manpower intensive, expensive and dangerous for the divers. Consequently, such hull inspections are carried out relatively infrequently, except maybe for high value naval units when lying at anchor far from their home bases.

More recently, since it has been recognized that harbours represent potential targets for terrorist attacks, harbour security has become an important matter of concern. One of the threats that have to be dealt with is the use of hostile equipment (e.g. a mine or a torpedo) attached as a keel appendice or in a cavity on the outside of the hull of a ship. Sinking a large vessel at the entrance of a large port or exploding a dirty bomb in the centre of a large coastal metropolis could result, with a high probability, in major human, social and economic damages.

Addressing such threats, US patent 7,301,851 discloses a method and survey system for optically and acoustically inspecting hulls of ships underway toward or from a harbour or other protected anchorage. The survey system has a base portion and side portions defining an inspection channel in water. Sonar is mounted on the side portions transmitting acoustic signals onto a hull as a ship passes through the inspection channel, receiving reflected acoustic signal portions of the transmitted acoustic signals, and converting the reflected acoustic signal portions into electromagnetic acousto-signals corresponding to the hull and objects on the hull. An electro-optic scanning array is mounted on the base member transmitting optical signals onto the hull as the ship passes through the inspection channel, receiving reflected optical signal portions of the transmitted optical signals, and converting the reflected optical signal portions into electromagnetic opto-signals corresponding to the hull and objects on the hull. A control module receiving the corresponding electromagnetic acousto-signals and opto-signals transmits these signals as amplified RF signals.

The survey system of US 7,301,851 requires a dedicated dry-dock shaped or barge-like inspection channel with side walls, on which sonars are mounted to check the flanks of the passing vessels. The fixed dimensions of the inspection channel cause the survey system to be more or less adapted to the vessel to inspect, depending on the dimensions thereof, in particular, length, draught and beam. While too large ships may not be inspected at all, the system may also have difficulties inspecting too small ships or multihulled ships, because of the increased distance between the sensors and the ship and/or shadowing effects.

### Technical problem

It is an object of the present invention to allow efficient automated under-keel inspection of sea-going or inland navigation vessels of different types and dimensions, as they pass an inspection point, e.g. at a port entrance. This object is achieved by an under-keel inspection system as claimed in claim 1.

### General Description of the Invention

According to the invention, an under-keel inspection system for inspection of vessels, e.g. underway toward or away from a harbour or other protected anchorage, comprises a beam configured for being arranged across a navigation corridor at a depth sufficient to allow a vessel to pass above the beam during inspection. The beam has a plurality of individual hull inspection devices mounted thereon, which are distributed over the length of the beam. Each hull inspection device is equipped, at least, with a sonar and is coupled with a deployment mechanism that may individually raise and lower the hull inspection device perpendicular to the axis of the beam in such a way as to adjust the distance between the hull inspection device and the vessel to inspect.

As those skilled will appreciate, the under-keel inspection system according to the invention may adopt an optimum configuration for each vessel to be inspected. Embodiments of the under-keel inspection system may be specifically configured for use in navigation corridors at sea or on lakes, or in rivers.

The spacings between the individual hull inspection devices along the beam are preferably chosen in accordance with their detection ranges and angles in such a way that a complete scan of a ship's hull may be achieved as the ship passes above the beam.

Advantageously, the length of the beam corresponds to the width of the navigation corridor. Alternatively, one could provide a series of such beams and arranged them in different sections of the width of the navigation corridor.

The beam is preferably anchored to the seabed at a depth that allows the biggest vessels admitted in the navigation corridor to pass.

Preferably, some or all of the hull inspection devices comprise an underwater camera.

According to a preferred embodiment of the invention, the hull inspection devices comprise a mechanism for tilting and/or panning. The orientation of the hull inspection devices can thus be adjusted to the area of the hull to inspect.

The sonars of the hull inspection devices are preferably short-range (e.g. less than 100 m), high-frequency sonars configured for operating at a frequency of at least 100 kHz.

Advantageously, each of the deployment mechanisms comprises a rod, radially departing from the beam axis, comprising a first end rotatably connected to the beam and a second end having the hull inspection device mounted thereon. Alternatively, each hull inspection device has positive buoyancy and is attached to the beam with a cable, while the corresponding deployment mechanism comprises a winch to wind up or let out the cable to adjust the distance between the hull inspection device and the vessel to inspect.

The under-keel inspection system preferably comprises a plurality of position sensors for determining position and attitude of the hull inspection devices. The position sensors (e.g. linear or rotary encoders, or other electromechanical transducers) may be integrated in mechanical joints of the system. Instead of or in addition to position sensors, the system could also comprise accelerometers or other motion sensors, attitude sensors such as e.g. (MEMS) gyroscopes, etc., to calculate the configuration of the system by integration (dead reckoning).

According to a preferred embodiment of the invention, the under-keel inspection system comprises a control unit (such as e.g. a computer, a computer network, an application-specific integrated circuit, etc.), operatively connected to the hull inspection devices and the deployment mechanisms and configured to control deployment of the hull inspection devices and to process data collected by the hull inspection devices.

Preferably, in particular if required for data processing, the control unit is operatively connected to the position, motion and/or attitude sensors and takes into account data provided by these sensors when controlling deployment of the hull inspection devices and/or processing data collected by the hull inspection devices.

Most preferably, the control unit comprises one or more communication modules (e.g. a network interface, a wireless access point, a gateway to a data network or the Internet, etc.) for interfacing with a vessel traffic service (VTS) system, a vessel traffic management information system (VTMIS) an automatic identification system (AIS), a port authority, the coastguard and/or a shipping database (such as e.g. Lloyd's Register, the American Bureau of Shipping, Det Norske Veritas, etc.) Those skilled will appreciate that, in case of a vessel approaching the inspection point, the control unit may connect to the VTS centre to obtain information on the ship's position, heading draught etc. so as to deploy those hull inspection devices that allow for an optimum scanning of the hull.

The control unit is preferably configured to reference data collected by the hull inspection devices to a coordinate system of the vessel to inspect. This may be greatly facilitated thanks to the system being capable of acceding to accurate ship tracking data.

The control unit may additionally be configured to compute a 2D (two-dimensional) mosaic, a 3D (three-dimensional) mosaic and/or a model, preferably a 3D model, of the outer surface of the hull of the vessel to inspect. The control unit may further be configured to compare the 2D mosaic, the 3D mosaic and/or the model with stored data (e.g. stored during a previous check) and/or downloaded data (e.g. from a shipping database) about the vessel to inspect. In case the 2D mosaic, the 3D mosaic and/or the model differs shows significant discrepancies with respect to the stored data, the under-keel inspection system may give an alarm, e.g. by sending an alert message to the port authority and/or the coastguard.

Preferably, the control unit comprises one or more displays for visualization of the data collected by the hull inspection devices.

### Brief Description of the Drawings

Preferred embodiments of the invention will now be described, by way of example, with reference to the accompanying drawings in which:
Fig. 1 is a schematic cross-sectional view of a preferred embodiment of an under-keel inspection device according to the invention;
Fig. 2 is a schematic illustration of an individual hull inspection device;
Fig. 3 is a schematic illustration of an example of a deployment mechanism for lowering and raising an individual hull inspection device;
Fig. 4 is a schematic perspective view of the main submerged parts of the under-keel inspection system of Fig. 1;
Fig. 5 is a schematic perspective view of the main submerged parts of an under-keel inspection system according to a variant of the invention.

### Description of Preferred Embodiments

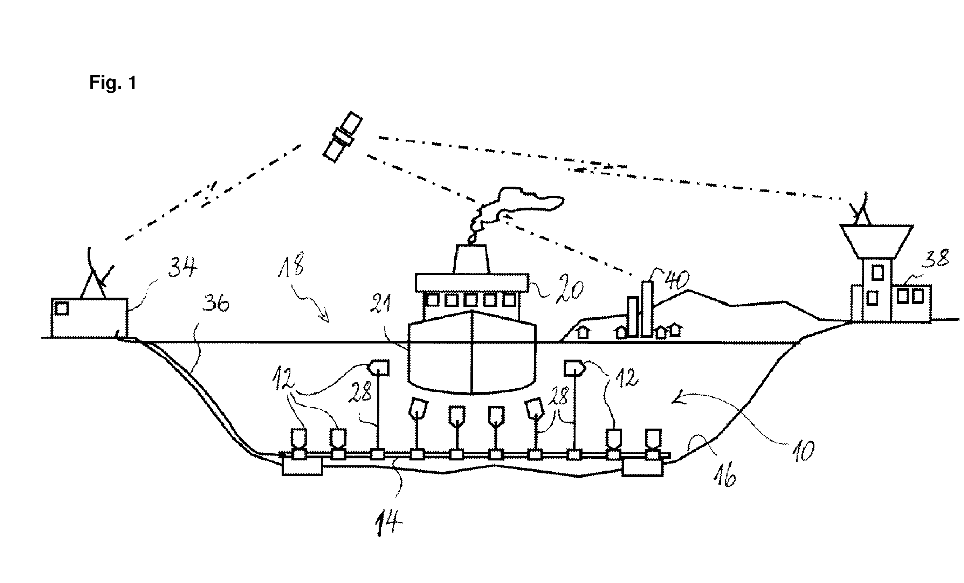

According to the embodiment of the invention illustrated in Fig. 1, the under-keel inspection system 10 comprises a linear array of hull inspection devices 12, each hull inspection device 12 comprising a set of appropriate sensors for inspecting a ship's hull (e.g. one or more underwater cameras, hydrophones or 3D sonars). The hull inspection devices 12 are attached to a long beam 14, anchored to the sea bed 16, all across the navigation corridor 18 of large maritime (sea-going) vessels 20 entering or exiting a port. The hull inspection devices 12 are mounted on the beam 14 in such a way that they can be raised from and lowered to the depth of the beam 14.

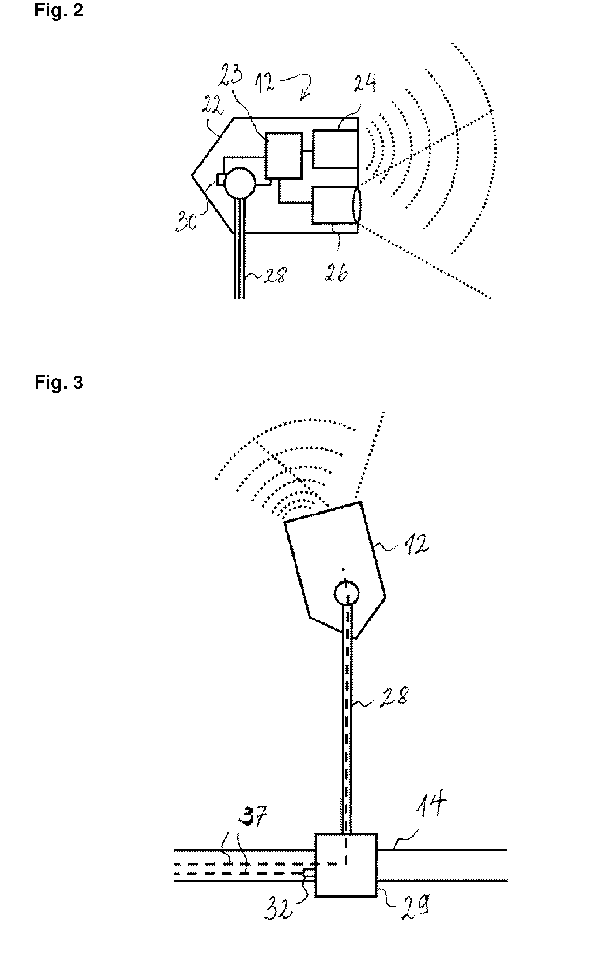

Fig. 2 is a more detailed illustration of an individual hull inspection device 12. The hull inspection device comprises a protective housing 22 including an interface 23 for power, commands and data. It further comprises a sensor head, incorporating a commercial active high-frequency sonar 24 and an underwater camera 26. The high-frequency sonar 24 preferably operates at a frequency > 100kHz, has a working range from 1 to 100 m and/or a resolution of less than 5 cm, and is possibly capable of synthetic aperture processing and/or automatic 2D or 3D mosaics generation (putting individual images together as a mosaic, while taking care of image overlaps, to obtain an overall 2D or 3D image of the hull) and scene visualization. The underwater camera 26 is useful, if the local waters are not turbid, to concurrently provide images of the hull section inspected by the active acoustic sensor. In turbid locations, the underwater camera 26 could be omitted. Preferably, the camera 26 is capable of zooming in and out.

The individual hull inspection device 12 optionally also comprises one or more attitude sensors (e.g. if the sensor head is not mechanically referenced to the beam 14 or the sea floor) and/or one or more passive acoustic sensors. Passive acoustic sensors are especially useful for detecting and tracking undeclared motorized crafts, such as e.g. outboard propelled fast crafts, jet skis and the like, possible used with malevolent intentions.

As best shown in Fig. 3, the deployment mechanism of each hull inspection device 12 comprises a rod 28 departing radially (preferably at a right angle) from the beam axis. The rod 28 is rotatably connected to the beam 14 with a rotary joint 29 at its first end. The hull inspection device 12 is mounted on the second, opposite, end of the rod 28 so as to be pivotable in the plane spanned by the beam 14 and the rod 28. Preferably, it may also be rotated about the axis of the rod 28. The deployment mechanism also comprises actuators (such as e.g. electric motors, pneumatic and/or hydraulic actuators; not shown) to move the rod 28 and the hull inspection device 12. A position sensor 30, 32 is associated with each mechanical joint in order to sense the current position thereof.

Turning again to Fig. 1, the under-keel inspection system 10 includes a control centre 34 with a computer network operatively connected to the hull inspection devices 12 as well as to the actuators and position sensors 30, 32 (e.g. rotary encoders) of the deployment mechanisms by means of a communication network. In the illustrated embodiment, the communication network includes an underwater cable 36 as well as cables, wires or glass fibers 37 (see Fig. 3) running inside the beam 14 and rods 28. The communication network may further comprise relays, multiplexers, demultiplexers, transducers, converters, etc. The control centre 34 collects the data from the individual hull inspection devices 12 and the other sensors of the system, in particular of the position sensors 30, 32. The data transmitted to the control centre 34 may be raw data or processed data, depending on the configuration of the hull inspection devices 12 and the sensors used therein.

When not actively inspecting a ship's hull, the hull inspection devices 12 are kept in a retracted position on the seafloor 16. In this position, they continuously monitor the water volume above them for any small craft, diver, submerged craft (e.g. a midget submarine) or other possible unidentified crossing. In case they detect something they send an alarm to the control center 34. Alternatively, the control center 34 processes raw data transmitted by the hull inspection devices 12 and searches them for anomalies that could be due to one of the above situations. In case the anomaly is significant but its cause cannot readily be identified, the control center 34 may deploy one or more hull inspection devices 12 in the zone, in which the anomaly has been detected, in an attempt to gain more conclusive data. This could be effected fully automatically or with user interaction (semi-automatically or with the operator controlling each move of the hull inspection devices 12).

The control centre 34 is operatively connected (e.g. via satellite links, terrestrial radio links, a wire-based communication network, or any other suitable communication means) to a VTS centre 38 and a port information system or shipping database 40. In case of a large vessel 20 approaching, the remote VTS centre 38 (or VTMIS or AIS) provides the under-keel inspection system 10 with information on the vessel 20, e.g. name, position, speed, heading, draught, etc. The control centre 34 further interfaces with the port information system and/or a shipping database 40 in order to obtain, based on the ship's name or other identifier previously communicated by the VTS, the precise hull characteristics (such as length, beam, draught etc.) Based on the received information, the control centre 34 determines the optimum configuration of the hull inspection devices 12 (including the inclination of the rods 28 and the orientation of the sensor heads of the hull inspection devices) to inspect the hull as the vessel 20 passes above the beam 14. The configuration may be static i.e. remain unchanged during the entire passage of the vessel 20 or dynamic, i.e. subject to changes. When the vessel 20 to be inspected is sufficiently close to the inspection point, the control centre 34 controls the deployment mechanisms in such a way as to implement the predetermined configuration. The data collected by the hull inspection devices 12 are sent in real-time to the control centre 34 for processing and visualization.

The control centre 34 may further be in communication with the port authority and/or the coastguard. Optionally, inspection of a passing vessel 20 may be subject to a request for inspection by at least one of these authorities.

Optionally also, the control centre 34 may be in or establish communication with other ship tracking systems, especially in cases where the point of the crossing cannot be determined with sufficient accuracy based on the data provided by the VTS centre 38. For instance, if the point of the crossing cannot be determined with a predetermined accuracy (e.g. at least +/- 5 m) a certain time (e.g. 5 minutes) in advance of the expected time of crossing, the control centre 34 may send a request for precise position and heading information to a GPS-based tracking system or the like.

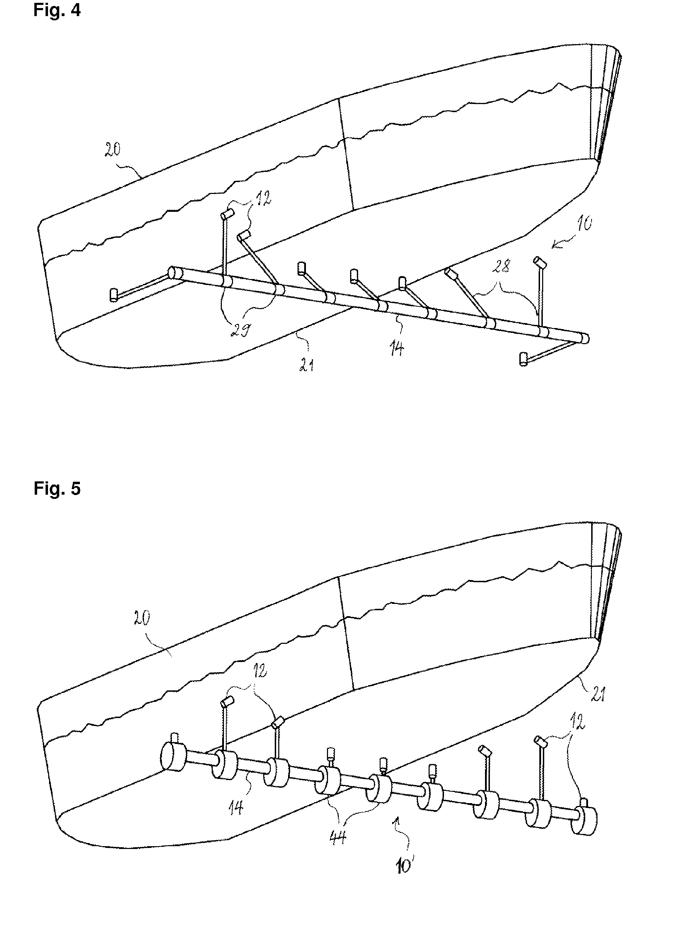

Fig. 4 shows a perspective schematic view of an under-keel inspection system 10 having the hull inspection devices 12 mounted on rods 28 radially extending from the beam 14 during inspection of a vessel 20. The rods 28 have a fixed length in the illustrated embodiment; alternatively, they could be telescopic or articulated.

Fig. 5 shows an alternative embodiment of an under-keel inspection system according to the invention. In the under-keel inspection system 10', each hull inspection device 12 has positive buoyancy and is attached to the beam 14 with a cable 42. Each deployment mechanism comprises a electric winch 44 to wind up or let out the cable 42 and to thereby adjust the distance between the hull inspection device 12 and the ship's hull. Those hull inspection devices 12 located directly underneath the ship's hull 21 are released only until the distance between the sensors and the ship's hull is optimal. Those hull inspection devices 12 located laterally underneath the ship's hull are raised into positions from which they can inspect the lateral surfaces of the hull.

### Legend:

- 10, 10': Under-keel inspection system
- 12: Hull inspection device
- 14: Beam
- 16: Seabed, seafloor
- 18: Navigation corridor
- 20: Maritime vessel
- 21: Hull
- 22: Housing
- 23: Interface
- 24: Sonar
- 26: Underwater camera
- 28: Rod
- 30: Position sensor
- 32: Position sensor
- 34: Control centre
- 36: Underwater cable
- 37: Glass fibre
- 38: VTS centre
- 40: Shipping database
- 42: Cable
- 44: Underwater winch

## Claims

1. Under-keel inspection system (10, 10') for inspection of vessels (20), comprising a beam (14) configured for being arranged across a navigation corridor (18) at a depth sufficient to allow a vessel (20) to pass above said beam (14) during inspection;
a plurality of hull inspection devices (12) mounted on said beam (14), distributed over a length of said beam (14), each hull inspection device (12) being equipped with a sonar (24);
wherein each hull inspection device (12) is coupled with a deployment mechanism to individually raise and lower said hull inspection device (12) perpendicular to the axis of said beam (14) in such a way as to adjust a distance between said hull inspection device (12) and a hull (21) of a vessel (20) to inspect.

2. The under-keel inspection system (10, 10') as claimed in claim 1, wherein some or all of said hull inspection devices (12) comprise an underwater camera (26).

3. The under-keel inspection system (10, 10') as claimed in claim 1 or 2, wherein said beam is anchored to the seabed (16).

4. The under-keel inspection system (10, 10') as claimed in any one of claims 1 to 3, wherein said hull inspection devices (12) comprise a mechanism for tilting and/or panning said hull inspection devices (12).

5. The under-keel inspection system (10, 10') as claimed in any one of claims 1 to 4, wherein said sonar (24) is configured for operating at a frequency of at least 100 kHz.

6. The under-keel inspection system (10) as claimed in any one of claims 1 to 5, wherein said deployment mechanism comprises a rod (28) radially departing from said beam axis, said rod (28) comprising a first end rotatably connected to said beam (14) and a second end having said hull inspection device (12) mounted thereon.

7. The under-keel inspection system (10') as claimed in any one of claims 1 to 5, wherein each hull inspection device (12) has positive buoyancy and is attached to said beam (14) with a cable (42), and wherein said deployment mechanism comprises a winch (44) to wind up or let out said cable (42) to adjust said distance.

8. The under-keel inspection system (10, 10') as claimed in any one of claims 1 to 7, comprising a plurality of position sensors (30, 32) for determining position and attitude of the hull inspection devices (12).

9. The under-keel inspection system (10, 10') as claimed in any one of claims 1 to 8, comprising a control unit (34) operatively connected to said hull inspection devices (12) and said deployment mechanisms, wherein said control unit (34) is configured to control deployment of said hull inspection devices (12) and to process data collected by said hull inspection devices (12).

10. The under-keel inspection system (10, 10') as claimed in claim 9 if dependent on claim 8, wherein said control unit (34) is operatively connected to said position sensors (30, 32) and wherein said control unit (34) takes into account position data provided by said position sensors (30, 32) when controlling deployment of said hull inspection devices (12) and/or processing data collected by said hull inspection devices (12).

11. The under-keel inspection system (10, 10') as claimed in claim 9 or 10, wherein said control unit (34) comprises one or more communication modules for interfacing with a port authority and/or a shipping database (40) and/or a ship tracking system, such as e.g. a Vessel Traffic Service system (38) and/or a Vessel Traffic Management Information System and/or an Automatic Identification System.

12. The under-keel inspection system (10, 10') as claimed in any one of claims 9 to 11, wherein said control unit (34) is configured to reference data collected by said hull inspection devices (12) to a coordinate system of said vessel (20) to inspect.

13. The under-keel inspection system (10, 10') as claimed in any one of claims 9 to 12, wherein said control unit (34) is configured to compute a 2D mosaic and/or a 3D mosaic and/or a model, preferably a three-dimensional model, of an outer surface of the hull (21) of said vessel (20) to inspect.

14. The under-keel inspection system (10, 10') as claimed in claim 13, wherein said control unit (34) is configured to compare said 2D mosaic and/or said 3D mosaic and/or said model with stored and/or downloaded data about said vessel (20) to inspect.

15. The under-keel inspection system (10, 10') as claimed in any one of claims 9 to 14, wherein said control unit (34) comprises one or more displays for visualization of said data collected by said hull inspection devices (12).
